(19) Europäisches Patentamt
European Patent Office
Office européen des brevets

(11) Publication number: 0 155 847
B1

(12) EUROPEAN PATENT SPECIFICATION

(45) Date of publication of patent specification: 08.11.89

(51) Int. Cl.$^4$: C 08 K 5/00 // (C08K5/00, 5:15, 5:37)

(21) Application number: 85301913.1

(22) Date of filing: 19.03.85

# (54) A stabilizer for synthetic resins and resins stabilized thereby.

(30) Priority: 19.03.84 JP 53186/84

(43) Date of publication of application:
25.09.85 Bulletin 85/39

(45) Publication of the grant of the patent:
08.11.89 Bulletin 89/45

(84) Designated Contracting States:
CH DE FR GB IT LI NL

(56) References cited:
EP-A-0 102 193
FR-A-2 258 386

(73) Proprietor: SUMITOMO CHEMICAL COMPANY, LIMITED
Kitahama 4-chome 5-33
Chuo-ku Osaka 541 (JP)

(72) Inventor: Ishii, Tamaki
1-12-2, Uchihonmachi
Suita Osaka-fu (JP)
Inventor: Yachigo, Shinichi
2-11-7-305, Sone Higashimachi
Toyonaka Osaka-fu (JP)
Inventor: Sasaki, Manji
2-1, Kuwatacho
Ibaraki Osaka-fu (JP)
Inventor: Shionoya, Masahisa
106-53, Wakecho
Izumi Osaka-fu (JP)
Inventor: Okamura, Haruki
3-4-2-711, Shigino-nishi
Joto-ku Osaka (JP)

(74) Representative: Geering, Keith Edwin et al
REDDIE & GROSE 16 Theobalds Road
London WC1X 8PL (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 155 847 B1

## Description

The present invention relates to a stabilizer for synthetic resins.

Various kinds of synthetic resin such as polyolefins (e.g. polyethylene, polypropylene), styrene type synthetic resins (e.g. polystyrene, impact-resistant polystyrene; ABS), engineering plastics (e.g. polyacetal, polyamide), polyurethane, etc. are widely used in various fields. It is well known that when these synthetic resins are used alone their stability becomes a problem, for example they deteriorate by the action of heat, light and oxygen on processing or use, thereby showing a remarkable reduction in mechanical properties accompanied by phenomena such as softening, embrittlement, surface crack, discoloration and the like.

It is also hitherto well known that, in order to solve this problem, various kinds of phenol, phosphite and sulfur type antioxidants may be added or used in the course of production and processing of synthetic resins. For example, it is well known that phenol type antioxidants such as 2,6-di-tert-butyl-4-methylphenol, 2,2'-methylenebis(4-methyl-6-tert-butylphenol), 4,4'-butylidenebis(3-methyl-6-tert-butylphenol), n-octadecyl 3-(5-di-tert-butyl-4-hydroxyphenyl)propionate, 1,1,3-tris(2-methyl-4-hydroxy-5-tert-butylphenyl)-butane, pentaerythritol tetrakis[3-(3,5-di-tert-butyl-4-hydroxyphenyl)propionate] and the like are used alone, or these phenol type antioxidants are used in combination with phosphite type antioxidants such as tris(nonylphenyl)phosphite, distearyl pentaerythritol diphosphite and the like, or sulfur type antioxidants such as dilauryl thiodipropionate, dimyristyl thiodipropionate, distearyl thiodipropionate and the like.

These methods are not satisfactory in terms of thermal and oxidation stability, thermal discoloration resistance, sublimation and the like.

A stabilizer comprising pentaerythritol tetrakis[3-(3,5-dialkyl-4-hydroxyphenyl)propionate] and pentaerythritol tetrakis(3-alkylthiopropionate) is proposed in Japanese Patent Application Kokai (JP—A—590 20337 and EP—A—102193). This stabilizer is fairly superior to the conventional ones, but it is not always entirely satisfactory in terms of thermal and oxidation stability, thermal discoloration resistance, etc. so that there has been a demand for stabilizers of higher performance.

The present inventors extensively studied these problems, and as a result, found that a mixture comprising particular phenol type and particular sulfur type compounds can give synthetic resins excellent thermal and oxidation stability which could not be predicted from the conventional antioxidant combination techniques.

The present invention provides a stabilizer for synthetic resins containing as an effective component a mixture comprising at least one phenol type compound of formula (I),

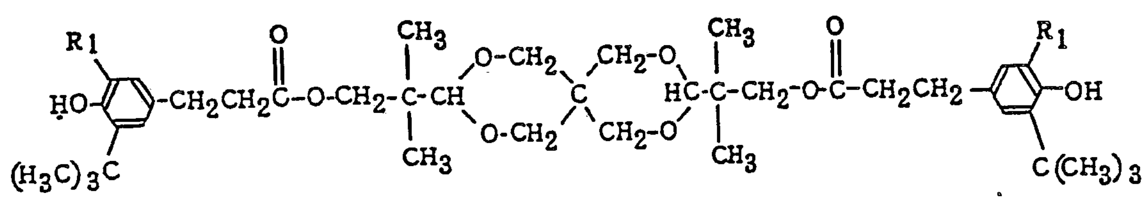
(I)

wherein $R_1$ represents a $C_1$—$C_3$ alkyl group, and at least one sulfur type compound (II) selected from those of formula (II—1),

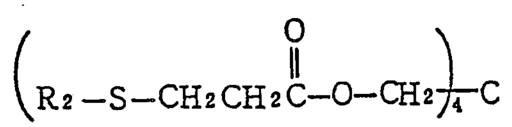
(II-1)

wherein $R_2$ represents a $C_4$—$C_{20}$ alkyl group, and those of formula (II—2),

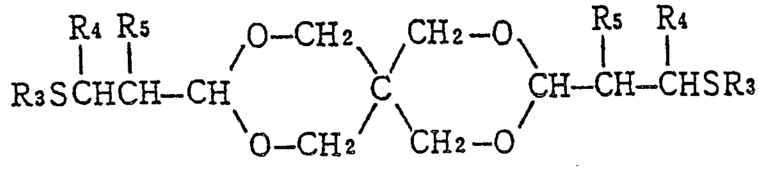
(II-2)

wherein $R_3$ represents a $C_3$—$C_{18}$ alkyl group, and $R_4$ and $R_5$ independently represented a hydrogen atom or a $C_1$—$C_6$ alkyl group; preferably the weight ratio of phenol type compound(s) (I) to sulfur type compound(s) (II) is 1 to 0.5—15, more preferably 1 to 10, most preferably 1 to 2—6.

The phenol type compunds (I) can be produced by the common ester interchange reaction of 3,9-bis(2-hydroxy-1,1-dimethylethyl)-2,4,8,10-tetraoxaspiro[5·5]undecane with 3-(3-alkyl-5-tert-butyl-4-hydroxyphenyl)propionic acid, its acid halide, acid anhydride or lower alkyl ester.

In the phenol type compounds (I), $R_1$ represents a methyl, ethyl or propyl group, but a methyl group is

preferred for good thermal and oxidation stability.

In the compounds (II—1), $R_2$ is preferably a $C_6$—$C_{18}$ alkyl group, most preferably a dodecyl group, for good thermal and oxidation stability.

Typical examples of such compounds are shown in Table 1.

Table 1

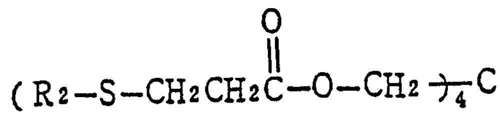

| Compound No. | $R_2$ |
|---|---|
| II−1−1 | $-C_6H_{13}$ |
| II−1−2 | $-C_{12}H_{25}$ |
| II−1−3 | $-C_{18}H_{37}$ |

In the compounds (II—2), $R_3$ is preferably a $C_8$—$C_{18}$ alkyl group and substituents $R_4$ and $R_5$ are preferably a hydrogen atom or a $C_1$—$C_3$ alkyl group for good thermal and oxidation stability.

Typical examples of such compounds are shown in Table 2.

Table 2

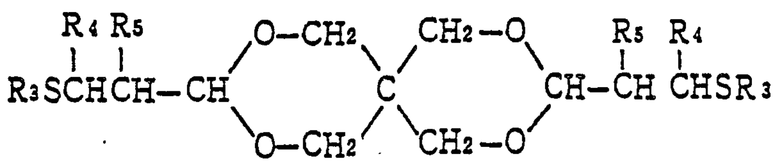

| Compound No. | $R_3$ | $R_4$ | $R_5$ |
|---|---|---|---|
| II−2−1 | $-C_8H_{17}$ | $-CH_3$ | −H |
| II−2−2 | $-C_{12}H_{25}$ | $-C_4H_9$ | −H |
| II−2−3 | $-C_{12}H_{25}$ | $-CH_3$ | −H |
| II−2−4 | $-C_{18}H_{37}$ | $-CH_3$ | −H |
| II−2−5 | $-C_{12}H_{25}$ | −H | −H |
| II−2−6 | $-C_{18}H_{37}$ | −H | $-CH_3$ |

When the weight ratio of sulfur type compound (II) to phenol type (I) is less than 0.5, the intended effect is difficult to obtain. If the weight ratio exceeds 15, improvement in proportion to the increased ratio is difficult to obtain; such ratios are disadvantageous economically.

The amount of stabilizer of the present invention used is generally 0.01 to 5, preferably 0.05 to 1 parts by weight based on 100 parts by weight of the synthetic resin. The phenol type (I) and sulfur type (II) compounds can be blended separately with the synthetic resin.

For blending the stabilizer with synthetic resins, well-known apparatus and methods for incorporating stabilizers, pigments, and fillers in synthetic resins may be used.

In applying the stabilizer of the present invention, other additives such as ultraviolet absorbers, light stabilizers, antioxidants, metal deactivators, metal soaps, nucleating agents, lubricants, antistatic agents, flame retardants, pigments, and fillers may be used together with said stabilizer.

Particularly, the light fastess of synthetic resins can be improved by using ultraviolet absorbers, hindered amine type light stabilizers such as 2 - hydroxy - 4 - methoxybenzophenone, 2 - hydroxy - 4 - n - octoxybenzophenone, 2 - (2 - hydroxy - 5 - methylphenyl)benzotriazole, 2 - (2 - hydroxy - 3 - tert -

butyl - 5 - methylphenyl) - 5 - chlorobenzotriazole, 2 - (2 - hydroxy - 3,5 - di - tert - butylphenyl) - 5 - chlorobenzotriazole, 2 - (2 - hydroxy - 3,5 - diamylphenyl)benzotriazole, [2,2' - thiobis(4 - tert - octylphenolate)]butylamine nickel complex, 2,2,6,6 - tetramethyl - 4 - piperidyl benzoate, bis(2,2,6,6 - tetramethyl - 4 - piperidyl) sebacate, bis(1,2,2,6,6 - pentamethyl - 4 - piperidyl) 2 - (3,5 - di - tert - butyl - 4 - hydroxybenzyl) - 2 - n - butylmalonate, 2 - [2 - {3 - (3,5 - di - tert - butyl - 4 - hydroxyphenyl)-propionyloxy}ethyl] - 4 - [3 - (3,5 - di - tert - butyl - 4 - hydroxyphenyl)propionyloxy] - 2,2,6,6 - tetramethylpiperidine, dimethyl succinate, 2 - (2 - hydroxyethyl) - 4 - hydroxy - 2,2,6,6 - tetramethylpiperidine polycondensation product, a reaction product of dihaloalkylene with N,N' - bis(2,2,6,6 - tetramethyl - 4 - piperidyl)alkylenediamine, a reaction product of 2,6 - dichloro - 1,3,5 - triazine with N,N' - bis(2,2,6,6 - tetramethyl - 4 - piperidyl)alkylenediamine, together with the stabilizer of the prsent invention.

Also, the color of synthetic resins can be improved by adding a phosphite type antioxidant. Such antioxidants include for example distearyl pentaerythritol diphosphite, tris(2,4-di-tert-butylphenyl)-phosphite, tris(2-tert-butyl-4-methylphenyl)phosphite, bis(2,4-di-tert-butylphenyl) pentaerythritol diphosphite, and tetrakis[2,4-di-tert-butylphenyl)-4,4'-biphenylene diphosphite.

By using the stabilizer of the present invention, the stability of synthetic resins can be improved. As such synthetic resins, there are given for example low-density polyethylene, high-density polyethylene, linear low-density polyethylene, chlorinated polyethylene, EVA resin, polypropylene, polyvinyl chloride, methacrylic resin, polystyrene, impact-resistant polystyrene, ABS resin, AES resin, MBS resin, polyethylene terephthalate, polybutylene terephthalate, polyamide, polyimide, polycarbonate, polyacetal, polyurethane, and unsaturated polyester resin. The stabilizer of the present invention is particularly effective on polypropylene.

Next, the present invention will be illustrated in detail with reference to the following examples, which are not however to be interpreted as limited the invention thereto.

Production of the Compound I—1 (of the invention)

0.82 Gram (0.015 mole) of sodium methoxide was added to a mixture of 30.2 g (0.121 mole) of methyl 3-(3-tert-butyl-4-hydroxy-5-methylphenyl)propionate and 15.3 g (0.0503 mole) of 3,9-bis(2-hydroxy-1,1-dimethylethyl)-2,4,8,10-tetraoxaspiro[5·5]undecane, and the whole mixture was heated. After carrying out reaction at 140°C for 3 hours, the reaction was continued for further 7 hours at 140°C to 160°C under a reduced pressure of 50 mmHg.

After completion of the reaction, the reaction product was dissolved in toluene, and the toluene solution was washed with a dlute aqueous hydrochloric acid and then with water. Thereafter, toluene was removed by evaporation under reduced pressure to obtain 42.9 g of a crude product of 77% in purity. The product was purified by column chromatography on silica gel to obtain 24 g of a 99%-purity, colorless and glassy product, 3,9 - bis[2 - {3 - (3 - tert - butyl - 4 - hydroxy - 5 - methylphenyl)propionyloxy} - 1,1 - dimethylethyl] - 2,4,8,10 - tetraoxoaspiro[5·5]undecane (compound I—1).

m.p. 45°—55°C

Elementary analysis (for $C_{43}H_{64}O_{10}$):

Found C, 69.61%; H, 8.98%

Calculated C, 69.70%; H, 8.71%

Mass analytical value (FD-mass):

Molecular ion peak 740

Proton NMR ($CDCl_3$/TMS):

δ(ppm) 0.92 (12H, s), 1.40 (18H, s), 2.21 (6H, s), 2.7 (8H, m), 3.4 (8H, m), 3.93 (4H, s), 4.17 (2H, s), 4.67 (2H, broad s), 6.85 (2H, broad s), 6.96 (2H, broad s)

Production of Compound I—2 (of the invention)

A mixture of 33.6 g (0.121 mole) of methyl 3 - (3 - tert - butyl - 4 - hydroxy - 5 - isopropylphenyl)-propionate, 15.3 g (0.0503 mole) of 3,9 - bis(2 - hydroxy - 1,1 - dimethylethyl) - 2,4,8,10 - tetraoxaspiro-[5·5]undecane and 0.82 g (0.015 mole) of sodium methoxide was reacted, after-treated and purified in the same manner as in Production example 1 to obtain 29 g of a 98%-purity, colorless and glassy product, 3,9 - bis[2 - {3 - (3 - tert - butyl - 4 - hydroxy - 5 - isopropylphenyl)propionyloxy} - 1,1 - dimethylethyl] - 2,4,8,10 - tetraoxaspiro[5·5]undecane (Compound I—2).

m.p. 47°—57°C

Elementary analysis (for $C_{47}H_{72}O_{10}$):

Found C, 70.99%; H, 9.41%

Calculated C, 70.82%; H, 9.10%

Mass analytical value (FD-mass):

Molecular ion peak 796

Proton NMR ($CDCl_3$/TMS):

δ(ppm) 0.91 (12H, s), 1.26 (12H, d), 1.40 (18H, s), 2.7 (10H, m), 3.4 (8H, m), 3.92 (4H, s), 4.19 (2H, s), 4.73 (2H, broad s), 6.91 (2H, broad s), 6.93 (2H, broad s)

Production of Compound AO—1 (not of the invention)

A mixture of 35.3 g (0.121 mole) of methyl 3 - (3,5 - di - tert - butyl - 4 - hydroxyphenyl)propionate, 15.3 g (0.0503 mole) of 3,9 - bis(2 - hydroxy - 1,1 - dimethylethyl) - 2,4,8,10 - tetraoxaspiro[5·5]undecane and 0.82 g (0.015 mole) of sodium methoxide was reacted, after-treated and purified in the same manner as for compound I—1 above to obtain 21 g of a 99%-purity white crystal, 3,9 - bis[2 - {3 - (3,5 - di - tert - butyl - 4 - hydroxyphenyl)propionyloxy} - 1,1 - dimethylethyl] - 2,4,8,10 - tetraoxaspiro]5·5]undecane (Compound AO—1).

m.p. 98°—100°C

Elementary analysis (for $C_{49}H_{76}O_{10}$):

| | | |
|---|---|---|
| Found | C, 71.76%; | H, 9.63% |
| Calculated | C, 71.33%; | H, 9.28% |

Mass analytical value (FD-mass):
Molecular ion peak 824

Proton NMR ($CDCl_3$/TMS):
δ(ppm) 0.91 (12H, s), 1.42 (36H, s), 2.7 (8H, m), 3.4 (8H, m), 3.93 (4H, s), 4.21 (2H, s), 5.05 (2H, broad s), 6.97 (4H, broad s)

Procedure 1

The following compounds were mixed on a mixer for 5 minutes and then melt-kneaded at 180°C on a mixing roll to obtain a blend. This blend was formed into a sheet 1 mm thick on a hot press kept at 210°C to prepare a test piece of 40 × 40 × 1 mm in size. This test piece was placed in a Geer oven kept at 160°C, and the time required for 30% of its area to become brittle was measured. This period of time was taken as the thermal brittleness induction period and used for evaluation of the thermal and oxidation stability.

Blend:

| | Part by weight |
|---|---|
| Unstabilized polypropylene resin | 100 |
| Calcium stearate | 0.1 |
| Test compounds [Examples 1—35] | variable |

Also, a test piece prepared in the same manner as above was tested for thermal discoloration in a Geer oven kept at 160°C. The thermal discoloration was evaluated by the color difference, ΔYI, between the test piece above and the antioxidant-free test piece before the thermal ageing. The results are shown in Table 4.

The symbols of the test compounds in Tables 4 (and 5) are shown in Table 3 below:

Table 3

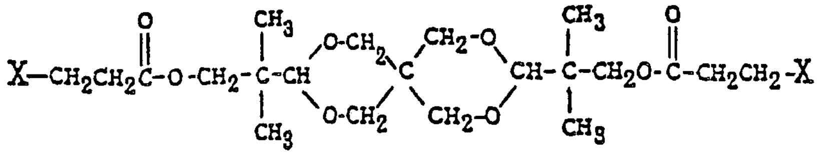

| Compound No. | X |
|---|---|
| I — 1 | 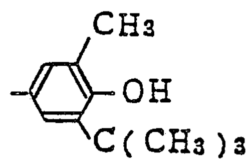 |
| I — 2 | 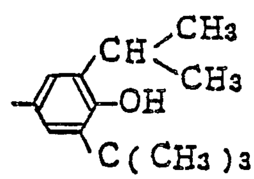 |
| AO — 1 | 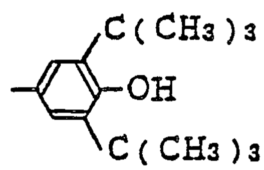 |

AO—2: Pentaerythritol tetrakis[3-(3,5-di-tert-butyl-4-hydroxyphenyl)propionate]
AO—3: Pentaerythritol tetrakis[3-(3-tert-butyl-4-hydroxy-5-methylphenyl)propionate]
AO—4: 1,3,5-Tris(2,6-dimethyl-4-tert-butyl-3-hydroxybenzyl)isocyanurate
AO—5: Dilauryl thiodipropionate
AO—6: Distearyl thiodipropionate

Table 4

| Example | No. | Phenol type stabilizer: Kind | Phenol type stabilizer: Part by weight | Sulfur type stabilizer: Kind | Sulfur type stabilizer: Part by weight | Thermal brittleness induction period (H) | ΔYI 0 (H) | ΔYI 48 (H) | ΔYI 504 (H) |
|---|---|---|---|---|---|---|---|---|---|
| Examples according to Invention | 1 | I-1 | 0.05 | II-1-1 | 0.2 | 1620 | -1.6 | -15.6 | -7.5 |
| | 2 | " | " | II-1-2 | 0.1 | 1460 | -1.3 | -14.7 | -5.5 |
| | 3 | " | " | " | 0.2 | 1870 | -1.9 | -16.3 | -8.5 |
| | 4 | " | " | " | 0.3 | 2300 | -1.9 | -16.4 | -8.5 |
| | 5 | " | " | II-1-3 | 0.2 | 1650 | -1.8 | -16.0 | -8.1 |
| | 6 | " | " | II-2-1 | " | 1640 | -1.6 | -15.8 | -7.0 |
| | 7 | " | " | II-2-2 | " | 1670 | -1.6 | -15.8 | -7.2 |
| | 8 | " | " | II-2-3 | " | 1790 | -1.7 | -16.0 | -8.0 |
| | 9 | " | " | II-2-4 | " | 1860 | -1.9 | -16.2 | -8.4 |
| | 10 | " | " | II-2-5 | " | 1790 | -1.7 | -15.9 | -8.0 |
| | 11 | " | " | II-2-6 | " | 1850 | -1.8 | -16.0 | -8.2 |
| | 12 | I-2 | " | II-1-2 | " | 1850 | -1.8 | -16.2 | -8.3 |
| | 13 | " | " | II-2-4 | " | 1840 | -1.8 | -16.1 | -8.2 |
| | 14 | " | " | II-2-5 | " | 1760 | -1.6 | -15.7 | -7.9 |
| Comparative examples | 15 | I-1 | " | AO-5 | " | 400 | -1.0 | -11.1 | – |
| | 16 | " | " | AO-6 | " | 580 | -1.2 | -11.4 | 1.4 |
| | 17 | I-2 | " | AO-5 | " | 370 | -1.0 | -11.0 | – |
| | 18 | " | " | AO-6 | " | 440 | -1.1 | -11.3 | – |
| | 19 | AO-1 | " | II-1-2 | " | 310 | -0.9 | -10.8 | – |
| | 20 | " | " | II-2-4 | " | 300 | -1.0 | -10.9 | – |
| | 21 | " | " | AO-5 | " | 340 | -0.9 | -10.7 | – |
| | 22 | " | " | AO-6 | " | 390 | -1.1 | -11.0 | – |
| | 23 | AO-2 | " | II-1-2 | " | 400 | -1.0 | -12.9 | – |
| | 24 | " | " | II-2-4 | " | 440 | -1.2 | -13.1 | – |
| | 25 | " | " | AO-5 | " | 450 | -1.3 | -13.2 | – |

Cont'd.

Table 4 (Cont'd)

| Example | No. | Phenol type stabilizer Kind | Phenol type stabilizer Part by weight | Sulfur type stabilizer Kind | Sulfur type stabilizer Part by weight | Thermal brittleness induction period (H) | ΔYI 0 (H) | ΔYI 48 (H) | ΔYI 504 (H) |
|---|---|---|---|---|---|---|---|---|---|
| | 26 | AO-2 | 0.05 | AO-6 | 0.2 | 750 | -1.3 | -13.8 | 1.5 |
| | 27 | AO-3 | " | II-1-2 | " | 1600 | -1.5 | -14.7 | -1.7 |
| | 28 | " | " | II-2-4 | " | 1580 | -1.5 | -14.5 | -1.5 |
| | 29 | " | " | AO-5 | " | 460 | -1.4 | -14.0 | — |
| | 30 | " | " | AO-6 | " | 620 | -1.4 | -14.1 | 2.1 |
| Comparative examples | 31 | AO-4 | " | II-1-2 | " | 1200 | 0.5 | - 7.5 | 3.7 |
| | 32 | " | " | II-2-4 | " | 1150 | 1.0 | - 6.7 | 4.5 |
| | 33 | " | " | AO-5 | " | 430 | 1.2 | - 5.3 | — |
| | 34 | " | " | AO-6 | " | 590 | 0.8 | - 5.1 | 12.2 |
| | 35 | — | — | — | — | 5 | 0.0 | — | — |

Procedure 2

The test compounds in Table 5 were bead-peptized together with an anionic surface active agent to prepare a suspension, and a prescribed amount, as shown in Table 5, of the suspension was added to a graft ABS latex. The mixture was, as usual, salted out with an aqueous magnesium sulfate solution, filtered, washed with water and dried to obtain an ABS resin powder which is a test sample. The thermal and oxidation stability of the ABS resin powder was evaluated by the methods described below. The results are shown in Table 5.

1. The degree of discoloration of the ABS resin powder after thermal ageing in a 180°C Geer oven was observed.

2. The oxygen absorption induction period (I.P.) in a 170°C oxygen atmosphere was measured using an oxygen absorption induction period measurement apparatus.

3. The ABS resin powder was repeatedly extruded on a small extruder (screw: D = 20 mmϕ, L/D = 25; strand die: D = 3 mmϕ, L/D = 10) under the following conditions. The degree of discoloration of the ABS pellet after 4th extrusion was evaluated by a color difference, ΔYI, between said ABS pellet and the antioxidant-free ABS pellet after 1st extrusion.

Extrusion conditions:

Number of revolutions: 40 rpm

| Temperature: | $C_1$ | $C_2$ | $C_3$ | D |
|---|---|---|---|---|
| | 220°C | 240°C | 260°C | 280°C |

4. The ABS pellet after 4th extrusion obtained by the method in 3 above was compression-molded under conditions of 180°C × 10 min. to prepare No. 1 test piece specified by JIS K 7111. Thereafter, the Charpy impact test was carried out according to JIS K 7111 using a Charpy impact tester. In Table 5, AO—7 represents the compound 2,6-Di-tert-butyl-4-methylphenol.

Table 5

| Test compound | | Examples according to Invention | | | | | | | | | Comparative example | | | | |
|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 |
| Phenol type stabilizer | I-1 | 0.5 | 0.5 | 0.5 | 0.5 | 0.5 | 0.5 | | | | 0.5 | | | | |
| | I-2 | | | | | | | 0.5 | 0.5 | 0.5 | | 0.5 | | | |
| | AO-1 | | | | | | | | | | | | 0.5 | 0.5 | 0.5 |
| | AO-2 | | | | | | | | | | | | | | |
| | AO-7 | | | | | | | | | | | | | | |
| Sulfur type stabilizer | II-1-2 | 0.5 | 1.0 | | | | | 0.5 | | | | | 0.5 | 1.0 | |
| | II-2-4 | | | 0.5 | 1.0 | | | | 0.5 | | | | | | 0.5 |
| | II-2-5 | | | | | 0.5 | 1.0 | | | 0.5 | | | | | |
| | AO-5 | | | | | | | | | | 0.5 | 0.5 | | | |
| Degree of discolor-ation | After 30 min | Pale yellow | do | do | do | do | do | do | do | do | Yellowish brown | do | do | do | do |
| | After 60 min | Yellowish brown | do | do | do | do | do | do | do | do | Brown | do | do | do | do |
| I.P. (min) | | 215 | 270 | 210 | 260 | 215 | 265 | 210 | 205 | 210 | 145 | 140 | 130 | 140 | 130 |
| ΔYI | | 10.9 | 10.3 | 11.0 | 10.6 | 10.8 | 10.4 | 11.0 | 11.3 | 11.0 | 14.2 | 14.6 | 15.5 | 15.6 | 15.3 |
| Value of Charpy impact test (Kgf·cm/cm) | | 21,3 | 21.8 | 20.5 | 21.1 | 20.8 | 21.3 | 21.1 | 21.6 | 20.3 | 11.8 | 11.4 | 11.1 | 12.2 | 11.0 |

Cont'd

Table 5 (Cont'd)

| Test compound | | Comparative examples | | | | | | | | | | | | | |
|---|---|---|---|---|---|---|---|---|---|---|---|---|---|---|---|
| | | 15 | 16 | 17 | 18 | 19 | 20 | 21 | 22 | 23 | 24 | 25 | 26 | 27 | 28 |
| Phenol type stabilizer | I-1 | | | | | | | | | | | | | | No addition |
| | I-2 | | | | | | | | | | | | | | |
| | AO-1 | 0.5 | 0.5 | | | | | | | | | | | | |
| | AO-2 | | | 0.5 | 0.5 | 0.5 | 0.5 | 0.5 | 0.5 | 0.5 | | | | | |
| | AO-7 | | | | | | | | | | 0.5 | 0.5 | 0.5 | 0.5 | |
| Sulfur type stabilizer | II-1-2 | | | 0.5 | 1.0 | | | | | | 0.5 | | | | |
| | II-2-4 | | | | | 0.5 | | | | | | 0.5 | | | |
| | II-2-5 | 0.5 | | | | | 0.5 | 1.0 | | | | | 0.5 | | |
| | AO-5 | | 0.5 | | | | | | 0.5 | 1.0 | | | | 0.5 | |
| Degree of discoloration | After 30 min | Yellowish brown | do | do | do | do | do | do | do | do | Deep brown | do | do | do | do |
| | After 60 min | Brown | do | do | do | do | do | do | do | do | Blackish brown | do | do | do | do |
| I.P. (min) | | 130 | 130 | 145 | 155 | 145 | 145 | 155 | 145 | 155 | 150 | 150 | 150 | 140 | 10 |
| ΔYI | | 15.5 | 15.7 | 14.5 | 14.7 | 14.3 | 14.5 | 14.8 | 14.6 | 14.9 | 14.5 | 14.6 | 14.8 | 15.0 | 15.9 |
| Value of Charpy impact test (Kgf·cm/cm) | | 11.0 | 10.8 | 11.7 | 12.9 | 11.6 | 11.6 | 13.0 | 11.4 | 13.5 | 12.4 | 12.5 | 12.4 | 11.7 | 7.2 |

Note : The amount added is the weight of the test compound (converted to solid basis) per 100 parts by weight of the solid matter of the resin.

In Tables 4 and 5 the color difference, ΔYI, is obtained from the following formula:

$$\Delta YI = YI - YI_0$$

wherein

YI is the yellowness of the test piece, and

$YI_0$ is the yellowness of a standard piece.

When the standard piece is white, a positive value of ΔYI means that the test piece becomes yellow, whereas a negative value of ΔYI means that the test piece becomes blue. The absolute numerical value of ΔYI indicates the extent to which the test piece color departs from the standard piece color in the yellow or blue direction; a large value indicates a large departure and a small value a slight departure.

In procedure 1, polypropylene sheet was evaluated for cases where stabilizers of the present invention were used, where comparative stabilizers were used, and where no such stabilizers were used. ΔYI in procedure 1 is the color difference between the test piece and the antioxidant-free piece before the previously described thermal ageing. The standard piece in procedure 1 is, therefore, the antioxidant-free polypropylene sheet before the thermal ageing, namely Example No. 35 in Table 4 after 0 hour of ageing.

Values of ΔYI in Table 4 are shown as those before the thermal ageing (0 hour), after 48 hours of thermal ageing and after 504 hours of thermal ageing. It is recognised from Table 4 that the polypropylene tends to become blue (to give a negative value of ΔYI) at the beginning of thermal deterioration and then to turn yellow (to give a positive value of ΔYI). In Table 4, data in the column for 48 hours are for those which are blue at the beginning of the thermal deterioration, whereas data in the column for 504 hours are for those turning yellow. Sections having no data mean that measurement was impossible because of thermal brittleness; thus in Example No. 15 it was impossible to measure ΔYI after 504 hours of thermal ageing, because the thermal brittleness induction period was 400 hours.

Among the data in the column for 504 hours in Table 4, examples according to the invention, namely Examples 1—14, are still between white and blue in color; most of the comparative examples, namely Examples 15—35, have turned to between white and yellow in color or have become too brittle to permit measurement of ΔYI — except only that Examples 27 and 28 retain their initial colors. this demonstrates that the present invention gives resistance to the thermal discoloration of polypropylene.

In procedure 2, ABS resin was evaluated in cases where stabilizers of the present invention were used, where comparative stabilizers were used, and where no such stabilizers were used. ΔYI in procedure 2 means the color difference between the test pellet after 4 times extrusion and the antioxidant-free ABS pellet after 1st extrusion as previously described. The standard piece in procedure 2 is, therefore, the antioxidant-free ABS pellet after 1st extrusion, whereas the measured test piece is the pellet after 4 times extrusion

The values of ΔYI in Table 5 are all positive, which means that all pieces turn yellow because of the heat history. However, ΔYI for examples according to the invention, namely Examples 1—9, is less than for the comparative examples, namely 10—28; thus the examples according to the invention discolor less than the comparative examples. This demonstrates that the present invention also gives resistance to thermal discoloration in ABS resins.

## Claims

1. A stabilizer for synthetic resins containing as an effective component a mixture comprising at least one phenol type compound selected from those of formula (I),

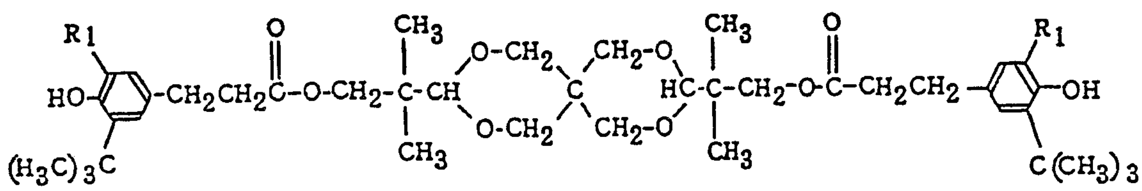

(I)

wherein $R_1$ represents a $C_1$—$C_3$ alkyl group, and at least one sulfur type compound (II) selected from those of formula (II—1),

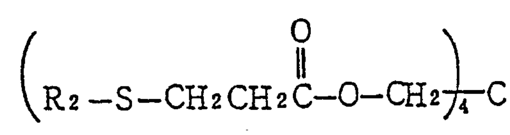

(II-1)

wherein $R_2$ represents a $C_4$—$C_{20}$ alkyl group, and those of formula (II—2),

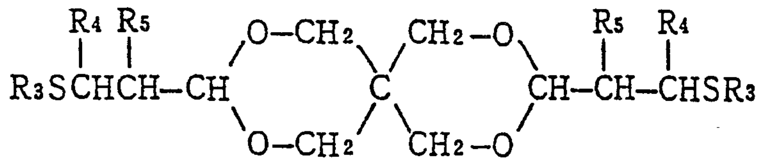

(II-2)

wherein $R_3$ represents a $C_3$—$C_{18}$ alkyl group, and $R_4$ and $R_5$ are selected independently from a hydrogen atom and $C_1$—$C_6$ alkyl groups.

2. A stablilizer according to claim 1 containing the phenol type compound (I) 3,9 - bis[2 - {3 - (3 - tert - butyl - 4 - hydroxy - 5 - methylphenyl)propionyloxy} - 1,1 - dimethylethyl) - 2,4,8,10 - tetraoxaspiro[5·5]undecane.

3. A stablilizer according to claim 1 or 2 containing the sulfur type compound (II—1) tetrakis(3-dodecylthiopropionyloxymethyl)methane.

4. A stablilizer according to claim 1, 2 or 3 containing the sulfur type compound (II—2) 3,9-bis(2-dodecylthioethyl)-2,4,8,10-tetraoxaspiro[5·5]undecane.

5. A stablilizer according to any preceding claim containing the sulfur type compound (II—2) 3,9-bis(2-octadecylthiopropyl)-2,4,8,10-tetraoxaspiro[5·5]undecane.

6. A stabilizer according to any preceding claim wherein the weight ratio of compound(s) I to compound(s) II is 1 to 0.5—15, preferably 1 to 1—10, most preferably 1 to 2—6.

7. A synthetic resin incorporating a stabilizer according to any preceding claim.

8. A polyolefin resin incorporating a stabilizer according to any of claims 1 to 5.

9. A polypropylene resin incorporating a stabilizer according to any of claims 1 to 5.

10. A resin according to any of claims 7 to 9 incorporating 0.01 to 5 parts by weight of stabilizer based on 100 parts by weight of resin.

**Patentansprüche**

1. Stabilisierungsmittel für synthetische Harze, enthaltend als wirksame Komponente eine Mischung aus wenigstens einer Phenoltyp-Verbindung, ausgewählt aus denjenigen der Formel (I)

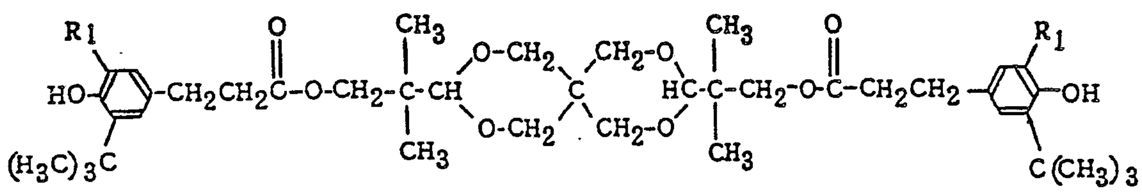

(I)

worin $R_1$ eine $C_1$—$C_3$-Alkylgruppe ist, und wenigstens einer Schwefeltyp-Verbindung (II), ausgewählt aus denjenigen der Formel (II—1)

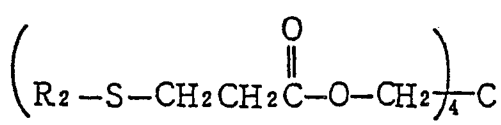

(II-1)

worin $R_2$ eine $C_4$—$C_{20}$-Alkylgruppe ist, und denjenigen der Formel (II—2)

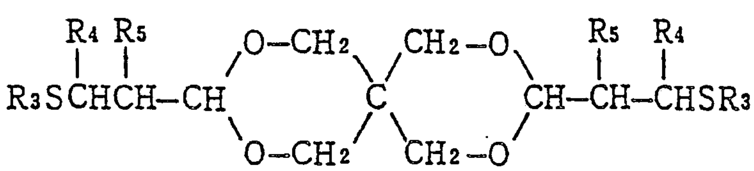

(II-2)

worin $R_3$ eine $C_3$—$C_{18}$-Alkylgruppe ist und $R_4$ und $R_5$ unabhängig voneinander ausgewählt sind aus einem Wasserstoffatom und $C_1$—$C_6$-Alkylgruppen.

2. Stabilisierungsmittel nach Anspruch 1, enthaltend die Phenoltyp-Verbindung (I) 3,9 - Bis[2 - {3 - (3 - tert.butyl - 4 - hydroxy - 5 - methylphenyl)propionyloxy} - 1,1 - dimethylethyl) - 2,4,8,10 - tetraoxaspiro[5·5]undecan.

3. Stabilisierungsmittel nach Anspruch 1 oder 2, enthaltend die Schwefeltyp-Verbindung (II—1) Tetrakis(3-dodecylthiopropionyloxymethyl)methan.

4. Stabilisierungsmittel nach Anspruch 1, 2 oder 3, enthaltend die Schwefeltyp-Verbindung (II—2) 3,9-Bis(2-dodecylthioethyl)-2,4,8,10-tetraoxaspiro[5·5]undecan.

5. Stabilisierungsmittel gemäß einem der vorhergehenden Ansprüche, enthaltend die Schwefeltyp-Verbindung (II—2) 3,9-Bis(2-octadecylthiopropyl)-2,4,8,10-tetraoxaspiro[5·5]undecan.

6. Stabilisierungsmittel nach einem der vorhergehenden Ansprüche, wobei das Gewichtsverhältnis der Verbindung(en) I zu der (den) Verbindung(en) II 1 zu 0,5—15, vorzugsweise 1 zu 1—10 und insbesondere 1 zu 2—6, ist.

7. Synthetisches Harz, enthaltend ein Stabilisierungsmittel gemäß einem der vorhergehenden Ansprüche.

8. Polyolefinharz, enthaltend ein Stabilisierungsmittel gemäß einem der Ansprüche 1 bis 5.

9. Polypropylenharz, enthaltend ein Stabilisierungsmittel gemäß einem der Ansprüche 1 bis 5.

10. Harz nach einem der Ansprüche 7 bis 9, enthaltend 0,01 bis 5 Gew.-Teile eines Stabilisierungsmittels, bezogen auf 100 Gew.-Teile Harz.

**Revendications**

1. Stabilisant pour résines synthétiques, contenant comme composant actif un mélange comprenant au moins un composé de type phénolique choisi entre des composés de formule (I):

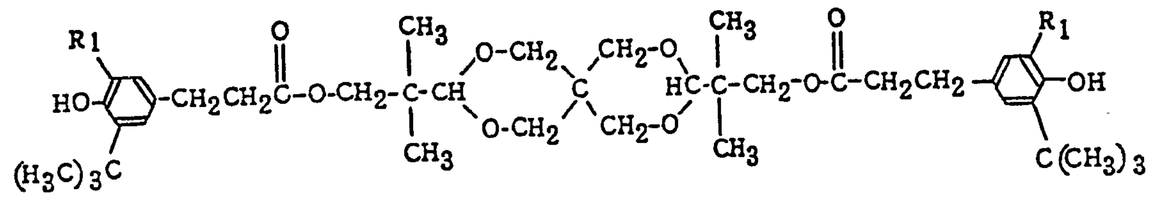
(I)

dans laquelle $R_1$ représente un groupe alkyle en $C_1$ à $C_3$, et au moins un composé (II) de type sulfuré choisi parmi des composés de formule (II—1),

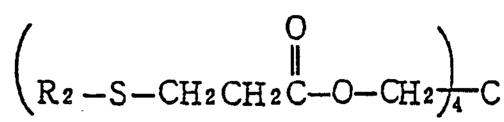
(II-1)

dans laquelle $R_2$ représente un groupe alkyle en $C_4$ à $C_{20}$, et des composés de formule (II—2),

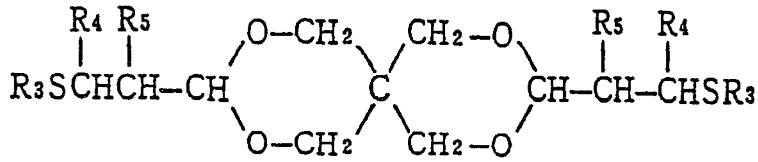
(II-2)

dans laquelle $R_3$ représente un groupe alkyle en $C_3$ à $C_{18}$ et $R_4$ et $R_5$ sont choisis, indépendamment, entre un atome d'hydrogène et des groupes alkyle en $C_1$ à $C_6$.

2. Stabilisant suivant la revendication 1, contenant comme composé (I) de type phénolique le 3,9 - bis(2 - {3 - (3 - tertio - butyl - 4 - hydroxy - 5 - méthylphényl)propionyloxy} - 1,1 - diméthyléthyl] - 2,4,8,10 - tétra - oxa - spiro[5·5]undécane.

3. Stabilisant suivant la revendication 1 ou 2, contenant comme composé (II—1) de type sulfuré le tétrakis(3-dodécylthiopropionyloxyméthyl)méthane.

4. Stabilisant suivant la revendication 1, 2 ou 3, contenant comme composé (II—2) de type sulfuré le 3,9-bis-(2-dodécylthioéthyl)-2,4,8,10-tétra-oxa-spiro[5·5]undécane.

5. Stabilisant suivant l'une quelconque des revendications précédentes, contenant comme composé (II—2) de type sulfuré le 3,9-bis-(2-octadécylthiopropyl)-2,4,8,10-tétra-oxa-spiro[5·5]undécane.

6. Stabilisant suivant l'une quelconque des revendications précédentes, dans lequel le rapport en poids du ou des composés I au ou aux comosés II a une valeur de 1 à 0,5—15, mieux encore de 1 à 1—10, notamment de 1 à 2—6.

7. Résine synthétique renfermant un stabilisant suivant l'une quelconque des revendications précédentes.

8. Résine polyoléfinique, renfermant un stbailisant suivant l'une quelconque des revendications 1 à 5.

9. Résine polypropylénique renfermant un stabilisant suivant l'une quelconque des revendications 1 à 5.

10. Résine suivant l'une quelconque des revendications 7 à 9, renfermant 0,01 à 5 parties en poids de stabilisant sur la base de 100 parties en poids de résine.